# EUROPÄISCHE PATENTSCHRIFT

(11) **EP 1 831 042 B1**
(45) Veröffentlichungstag und Bekanntmachung des Hinweises auf die Patenterteilung: **09.02.2011**
(21) Anmeldenummer: 05817205.7
(22) Anmeldetag: 29.11.2005
(51) Int. Cl.: B60J 7/20

(54) **KRAFTFAHRZEUG MIT EINEM BEWEGLICHEN DECKELTEIL DER KAROSSERIE**
MOTOR VEHICLE COMPRISING A DISPLACEABLE COVER PART OF THE VEHICLE BODY
VEHICULE AUTOMOBILE POURVU D'UNE PARTIE DE CARROSSERIE MOBILE FAISANT OFFICE D'ELEMENT DE RECOUVREMENT

(30) Priorität: 22.12.2004 DE 102004061828
(43) Veröffentlichungstag der Anmeldung: 12.09.2007
(73) Patentinhaber: Wilhelm Karmann GmbH, 49084 Osnabrück (DE)
(72) Erfinder: SELLE, Heinrich, 32549 Bad Oeynhausen (DE)
(74) Vertreter: Kronthaler, Schmidt & Coll.
(86) Internationale Anmeldenummer: PCT/DE2005/002147
(87) Internationale Veröffentlichungsnummer: WO 2006/066526

(56) Entgegenhaltungen:
- EP-A- 1 084 885
- DE-A1- 4 336 278
- DE-A1- 10 160 406
- DE-U1- 8 913 486

## Beschreibung

Die Erfindung betrifft ein Kraftfahrzeug mit einem zumindest teilweise beweglichen und in der Karosserie unterhalb eines Deckelteils ablegbaren Dach nach dem Oberbegriff des Anspruchs 1 oder des Anspruchs 2.

Es ist bekannt (Z.B.:von EP-A-1084885), ein derartiges Deckelteil durch seitlich in der Karosserie liegende Antriebsorgane, etwa Hydraulikzylinder, zu bewegen. Bei bestimmten Karosserieformen ist es wünschenswert, die Antriebsorgane relativ flach liegend in der Karosserie anzuordnen, etwa um Kollisionen der Antriebsorgane mit seitlichen Radhäusern zu vermeiden und den zur Verfügung stehenden Raum effizient und mit möglichst minimierter Beeinträchtigung des verbleibenden Kofferraums zu nutzen. Bei einer solchen flachen Anordnung kann sich insbesondere in der Endphase der Schließbewegung des Deckelteils das Problem ergeben, daß entweder der Winkel zwischen der Linie, die den Angriffspunkt des Antriebsorgans mit der Schwenkachse des Deckelteils verbindet, und der Kraftrichtung sehr klein wird und/oder die Verbindungslinie zwischen dem Kraftangriffspunkt und der Schwenkachse des Deckelteils sehr kurz ist und somit das durch das Antriebsorgan aufgebrachte Drehmoment auf das Deckelteil sehr klein wird. Dieses erschwert insbesondere das Schließen des Deckelteils, da hierbei häufig noch zusätzlich gegen die auffedernde Kraft einer Dichtung, auf die das geschlossene Dekkelteil drückt, angearbeitet werden muß.

Der Erfindung liegt das Problem zugrunde, die Bewegbarkeit des Deckelteils nahe seiner geschlossenen Stellung auch bei zumindest einem Antriebsorgan mit einer flach in der Karosserie wirkenden Kraftlinie zu verbessern.

Die Erfindung löst dieses Problem durch ein Kraftfahrzeug mit den .Merkmalen des Anspruchs 1.

Hinsichtlich vorteilhafter Ausgestaltungen und Weiterbildungen der Erfindung wird auf die weiteren Ansprüche 2 bis 11 verwiesen.

Durch die erfindungsgemäße Ausbildung einer Zuziehhilfe nach Anspruch 1 wird eine im wesentlichen in Fahrtrichtung nach vorne gerichtete Zugkraft eines Antriebsorgans zumindest teilweise in eine Abwärtskraft auf das vordere Ende des Deckelteils überführt, so daß dessen Schließen erleichtert ist. Die Zuziehhilfe ist durch das Antriebsorgan für das Dekkelteil beweglich und benötigt daher keine eigene Ansteuerung oder eigenen Antrieb.

Wenn für das Antriebsorgan nur im Nahbereich seiner eingezogenen Stellung eine bewegliche Zuziehhilfe das Deckelteil betätigt, die bei voll eingezogenen Antriebsorgan in einer Über-Totpunkt-Stellung gehalten ist, ergibt sich gerade in diesem Endbereich der Zuziehbewegung eine vorteilhafte Zusatzkraft, die das Deckelteil zu schließen hilft.

Durch die besonders vorteilhafte Über-Totpunkt-Lage des Deckelteils in geschlossener Stellung ergibt sich eine besondere Sicherung für dieses, die allein durch das eingezogene Antriebsorgan nicht geleistet werden könnte.

Bei Vorsehen eines verschwenkbaren Greifers innerhalb der Zuziehhilfe kann dieser einen erheblichen Weg zurücklegen und dabei ein Gegenstück des Deckelteils schon wenige Grad vor Schließstellung des Dekkelteils aufnehmen und aktiv durch sein Verschwenken abwärts bewegen.

Sofern das Antriebsorgan als Hydraulikzylinder ausgebildet ist, der an einem um eine karosseriefeste Achse schwenkbaren Lenker gehalten ist, wird dieser Lenker bei Einfahren des Hydraulikzylinders automatisch um seine Achse verschwenkt und kann dadurch die Zuziehhilfe mit verschenken. Dabei ist eine große Übersetzung möglich.

Auch ein enger Einbauraum mit ungünstigen Kraftlinien kann über zumindest einen kraftumlenkenden Zwischenhebel effektiv genutzt werden.

Durch ein fernbetätigbares Schloß zur Sicherung der geschlossenen Stellung des Deckelteils durch Blokkierung der Bewegung der Zuziehhilfe kann ein unbefugtes Öffnen des Deckelteils in jedem Fall zuverlässig verhindert werden.

Vorteilhaft ist die Erfindung anwendbar auf Teil- oder Vollcabriolet-Fahrzeuge, bei denen ein relativ großes Deckelteil vorgesehen ist, das einerseits in dem genannten Öffnungssinn zur Freigabe der Durchtrittsöffnung für das Dach oder die Dachteile und andererseits zur Freigabe einer Beladeöffnung für Gepäck gegensinnig aufschwenkbar ist.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: ein erfindungsgemäßes, hier als Voll- Cabriolet ausgebildetes Kraftfahrzeug bei geschlossenem Dach und zur Freigabe der Durchtrittsöffnung für das Dach aufbewegtem Deckelteil in einem ersten Ausführungs- beispiel,
- Fig. 2: eine ähnliche Ansicht wie Fig. 1 während des Schließens des Deckelteils,
- Fig. 3: eine ähnliche Ansicht wie Fig. 2 in der Endphase der Schließbewegung des Deckel- teils, in der die Ausleger und die Füh- rungseinrichtungen in Verbindung zueinander geraten,
- Fig. 4: eine ähnliche Ansicht wie Fig. 3 bei weiter fortschreitendem Schließen des Deckelteils,
- Fig. 5: eine ähnliche Ansicht wie Fig. 4 bei fast geschlossenem Deckelteil,
- Fig. 6: eine ähnliche Ansicht wie Fig. 5 bei ge- schlossenem Deckelteil,
- Fig. 7: eine schematische Seitenansicht des geöff- neten Deckelteils eines zweiten Ausfüh- rungsbeispiels,
- Fig. 8: eine ähnliche Ansicht wie Fig. 7 während der Schließphase des Deckelteils kurz vor Eingriff der Zuziehvorrichtung,
- Fig. 9: das Detail IX in Fig. 8,
- Fig. 10: eine ähnliche Ansicht wie Fig. 8 während der Endphase der Schließbewegung,
- Fig. 11: das Detail XI in Fig. 10,
- Fig. 12: eine ähnliche Ansicht wie Fig. 11 in Schließstellung des Deckelteils,
- Fig. 13: das Detail XIII in Fig. 12,

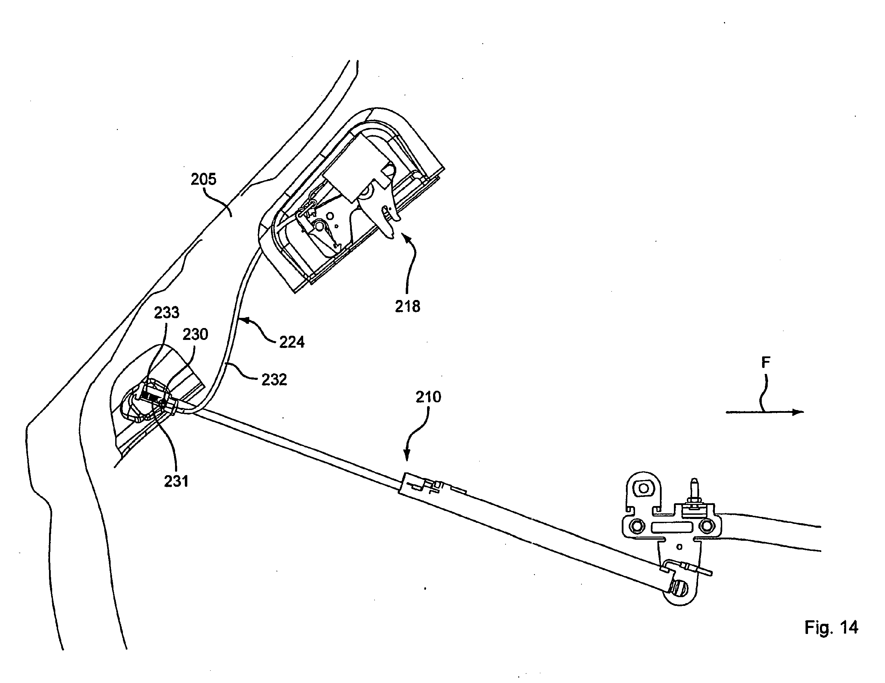

- Fig. 14: eine schematische Seitenansicht eines wei- teren Ausführungsbeispiels für eine Zuzieh- hilfe mit Über-Totpunkt-Mechanik bei geöff- netem Deckelteil,

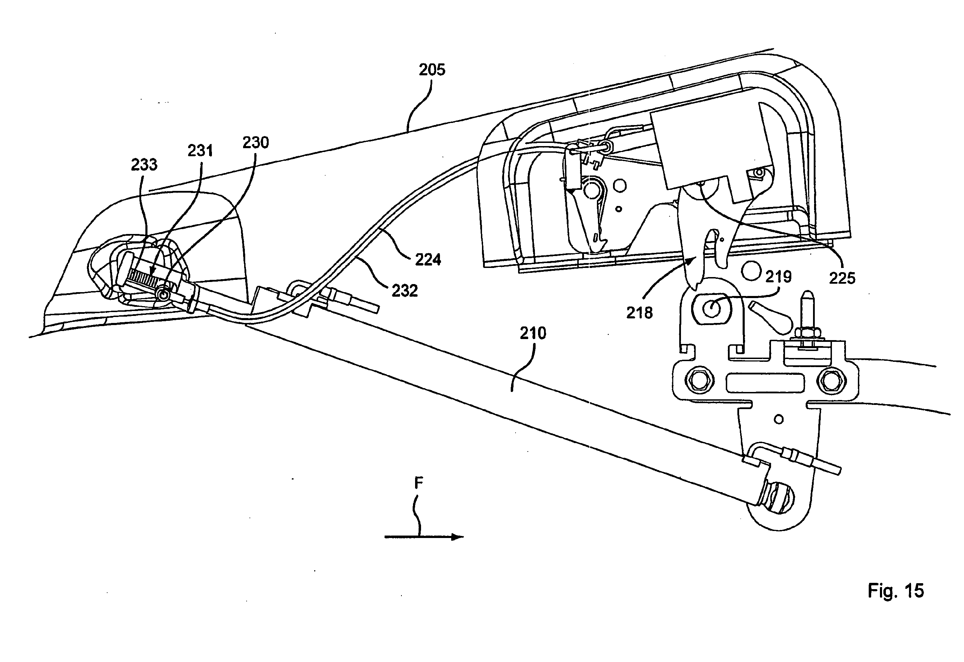

- Fig. 15: eine ähnliche Ansicht wie Fig. 14 während des Schließens des Deckelteils,
- Fig. 16: eine Detailansicht der eingreifenden Zu- ziehvorrichtung,
- Fig. 17: eine ähnliche Ansicht wie Fig. 16 bei ge- schlossenem Deckelteil,
- Fig. 18: eine Gesamtansicht auch des Hydraulikzylin- ders in der Stellung nach Fig. 17.

Das erfindungsgemäße Kraftfahrzeug 1 kann entweder ein mit zumindest einer Rückbank versehenes vier- oder mehrsitziges Fahrzeug oder ein Zweisitzer sein.

Dabei kann das Dach 2 ganz oder nur teilweise, etwa nur der zwischen festen Seitenrahmen bewegliche Teil, aufbeweglich sein. Hier ist ein insgesamt zu öffnendes Dach 2 eines Vollcabriolet-Fahrzeugs 1 dargestellt. Dieses kann sowohl feste Plattenteile umfassen als auch ein von einem flexiblen Bezug überspanntes Soft-Top bilden. Der zu öffnende Teil bzw. das gesamte Dach 2 kann manuell oder voll- oder teilautomatisch zu bewegen sein.

Im folgenden sind die Verhältnisse für das erste Ausführungsbeispiel erläutert, gelten jedoch für die weiteren Ausführungsbeispiele entsprechend:
Das Dach 2 ist zu seiner Öffnung im hinteren Fahrzeugbereich ablegbar. Hierzu ist eine Eintrittsöffnung 3 in die Karosserie 4 vorgesehen, die zumindest im wesentlichen oberseitig von einem Deckelteil 5 verschließbar ist.

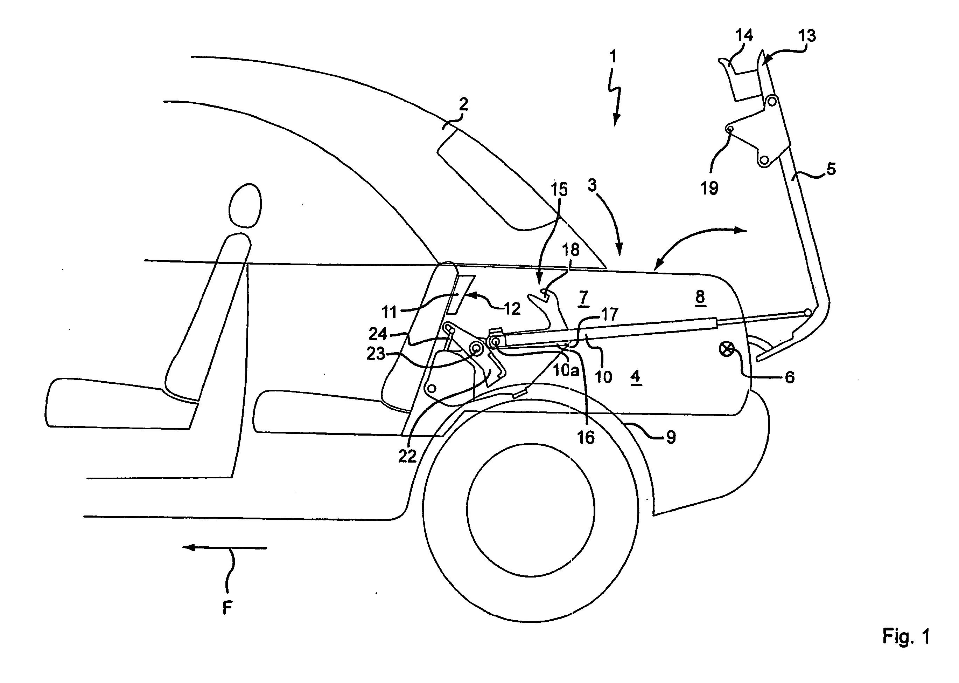

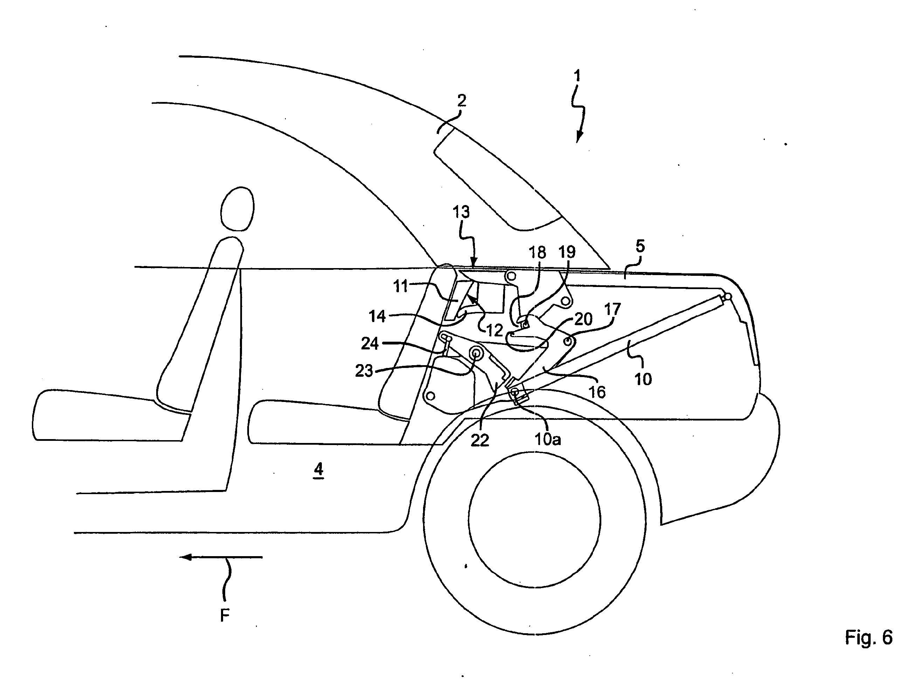

Das Deckelteil 5 ist um eine heckwärtige und im wesentlichen quer zur Fahrtrichtung F liegende Schwenkachse 6 zwischen seiner Offenstellung (z. B. Fig. 1) und seiner Schließstellung (z. B. Fig. 6) beweglich. Die Bewegung muß keine reine Rotationsbewegung sein. Auch eine überlagerte translatorische und rotatorische Bewegung - etwa auch über ein Mehrgelenk - ist möglich.

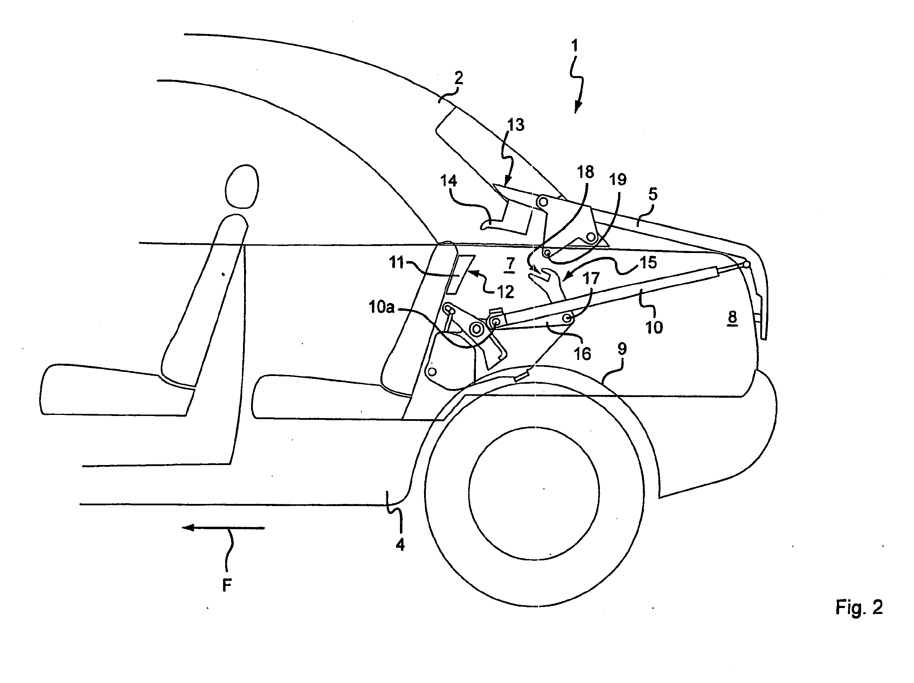

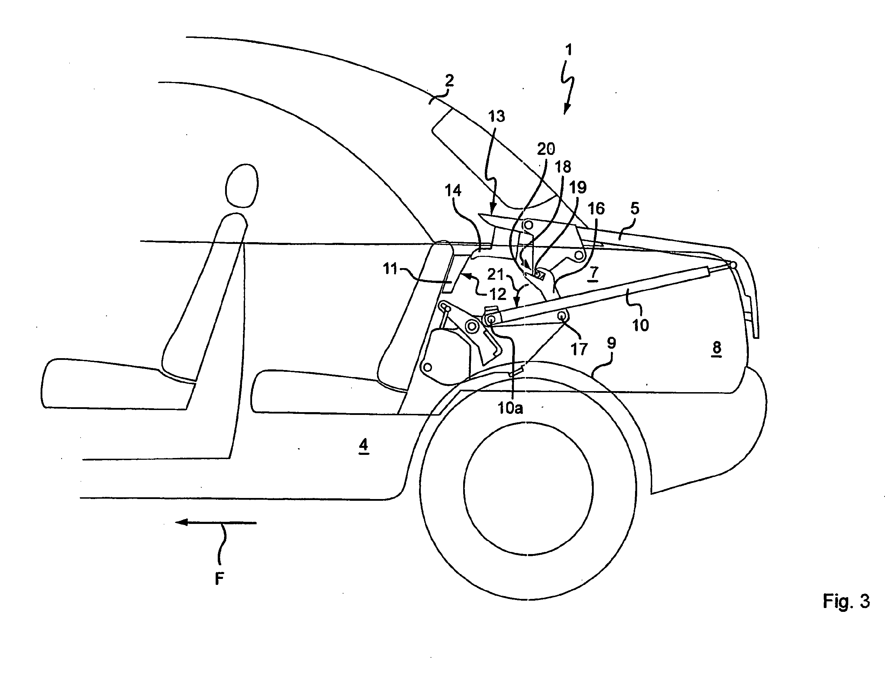

Es kann, wie im ersten Ausführungsbeispiel (Fig. 1 bis Fig. 6) dargestellt, ein großes Deckelteil 5 vorgesehen sein, das den Dachaufnahmeraum 7 und den Kofferraum 8 übergreift und das einerseits in dem genannten Öffnungsschwenksinn zur Freigabe der Durchtrittsöffnung für das Dach 2 oder die Dachteile und andererseits zur Freigabe einer Beladeöffnung für Gepäck gegensinnig hierzu aufschwenkbar ist. Auch ein nur in einem Schwenksinn öffnungsfähiges Deckelteil ist alternativ möglich.

Zumindest zur Bewegung des Deckelteils 5 zum Öffnen oder Schließen der Durchtrittsöffnung 3 für das Dach 2 (Fig. 1) ist ein seitliches Antriebsorgan 10 vorgesehen, das hier als Hydraulikzylinder ausgebildet ist. Im Ausführungsbeispiel herrschen an beiden Fahrzeugquerseiten gleiche Verhältnisse, was nicht zwingend ist.

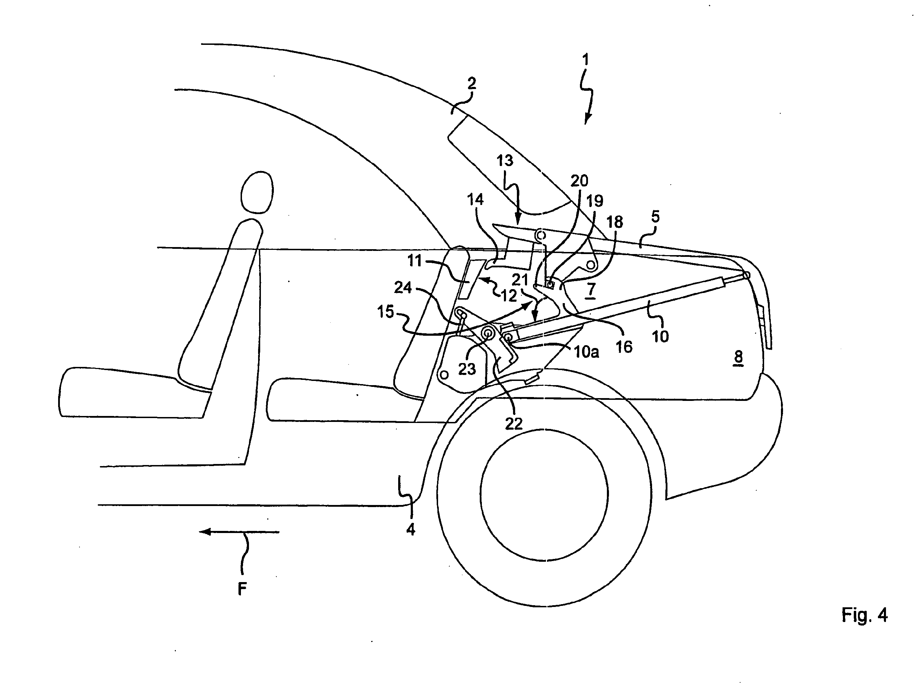

Das Antriebsorgan 10 liegt zumindest nahezu in einer vertikalen Fahrzeuglängsebene und zur effektiven Raumnutzung in einem Fahrzeug mit kurzem Heckbereich und kurzem hinterem überhang sowie zur vermeidung einer Kollision mit dem Radhaus 9 flach unterhalb des Deckelteils 5. Zumindest in der Endphase der Schließbewegung des Deckelteils 5 (Fig. 4 bis Fig. 6) liegt das Antriebsorgan 10 mit einem Winkel von deutlich weniger als 30° gegen die Horizontale geneigt. Das Deckelteil 5 steht selbst in dieser Bewegungsphase um weniger als 10° zur Horizontalen geneigt.

Im ersten Ausführungsbeispiel ist nur beispielhaft zusätzlich zur erfindungsgemäßen und weiter unten beschriebenen aktiven Zuziehvorrichtung 15 auf jeder Querseite eine passive, karosseriefeste Führungseinrichtung 11 angeordnet, die in geschlossener Stellung des Deckelteils 5 unterhalb seines vorderen Endes 13 gelegen ist und eine ansteigende und im wesentlichen heckwärts weisende Führungsfläche 12 umfaßt.

Die Führungsfläche 12 ist zur Zusammenwirkung mit Auslegern 14 am vorderen Ende 13 des Deckelteils 5 vorgesehen, die an der Führungsfläche 12 entlangbewegbar sind. Diese Ausleger 14 können mit Roll- oder Gleitkörpern versehen sein. Zumindest in der Endphase der Schließbewegung des Deckelteils 5 werden die Ausleger 14 an die mit einer entgegen der Fahrtrichtung F schräg ansteigenden Komponente ausgebildeten Führungsflächen 12 herangedrückt und dabei zwangsweise abwärts umgelenkt, da eine weitere Vorwärtsbewegung durch die als Abgleitschrägen ausgebildeten Führungsflächen 12 verhindert ist. Da die Ausleger 14 nicht lotrecht auf die Fläche 12 auftreffen, sondern diese schräg zur Kraftrichtung steht, resultiert eine Abwärtskraft auf die Ausleger 14 und somit auf das vordere Ende 13 des Deckelteils 5.

Im ersten Ausführungsbeispiel nach den Figuren 1 bis 6 umfaßt die aktive Zuziehvorrichtung 15 einen um eine karosseriefeste Fahrzeugquerachse 17 schwenkbaren und insgesamt im wesentlichen L-förmigen Schwenklenker 16. An diesem ist der Hydraulikzylinder 10 über das Gelenk 10a beweglich gehalten. Der Schwenklenker 16 umfaßt am Ende seines der Anlenkung 10a abgewandten Schenkels einen gabelförmigen Greifer 18, der nach Art einer Drehfalle zur Zusammenwirkung mit einem Gegenstück 19 des Deckelteils 5, etwa einem quer zum Fahrzeug 1 erstreckten Bolzen, im Nahbereich der geschlossenen Stellung des Deckelteils 5 vorgesehen ist.

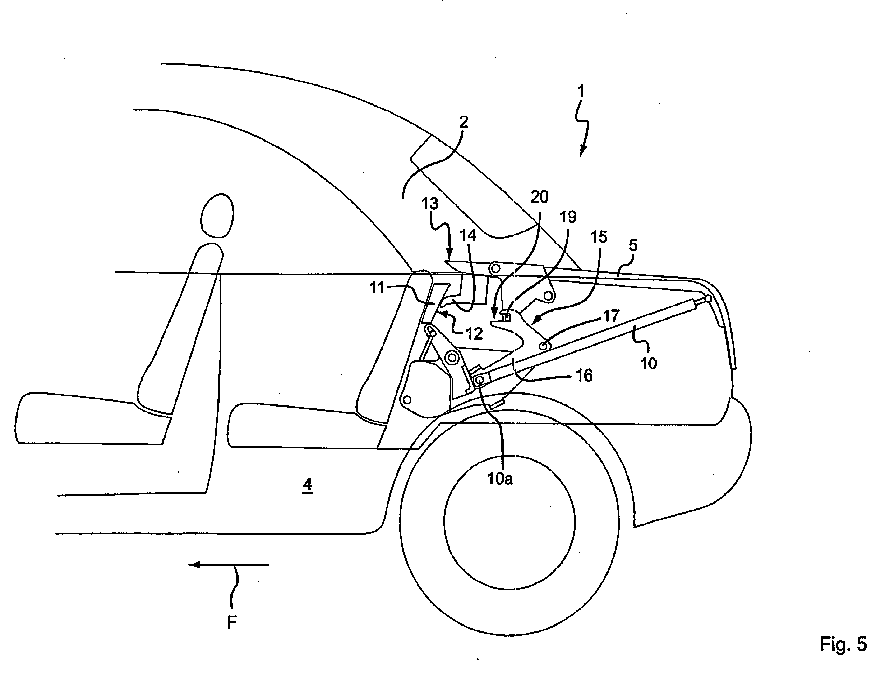

In der Endphase der Schließbewegung des Deckelteils 5 trifft durch dessen Abwärtsbewegung der Bolzen 19 auf die untere Gabelzinke 20 des Greifers 18 auf und verschwenkt diesen und somit auch den Lenker 16 in Richtung des Pfeils 21. Dadurch gelangt (Fig. 4) die Anlenkung 10a des Hydraulikzylinders 10 in eine Linie mit der karosseriefesten Achse 17 des Lenkers 16 (Totpunktlage), so daß durch weiteres Einziehen des Hydraulikzylinders 10 die Zuziehvorrichtung 15 in eine Über-Totpunkt-Lage gelangt (Fig. 5, 6).

Zur Sicherung der geschlossenen Stellung (Fig. 6) ist ein fernbetätigbares Schloß 22 vorgesehen, das hier im Schließsinn federbeaufschlagt ist und an dem der Lenker 16 bei Schließen des Deckelteils 5 entlanggleitet. Sobald der Lenker 16 hinreichend weit abwärts verlagert ist, schwenkt der Hebel des Schlosses 22 dann um seine Achse 23 derart ein, daß er eine Rückbewegung des Lenkers 16 und somit auch der Zuziehhilfe 15 blockiert. Durch ein Betätigungsorgan 24 kann das Schloß 22 wieder gelöst werden.

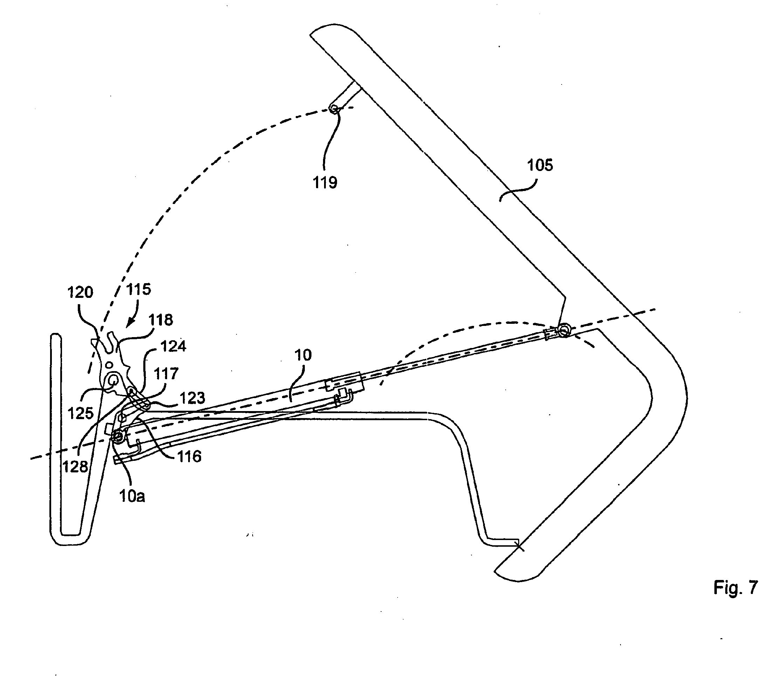

Im zweiten Ausführungsbeispiel nach den Figuren 7 bis 13 ist die auch hier aktiv das Deckelteil 105 abwärts ziehende Zuziehvorrichtung 115 direkt vom Hydraulikzylinder 10 betätigbar und ohne eigene Steuerung nahtlos in dessen Bewegungsablauf eingebunden, was hinsichtlich einer einfachen Konstruktion und störungsfreien Bedienung besonders günstig ist..

Die Zuziehvorrichtung 115 umfaßt hier einen ersten, um eine karosseriefeste Fahrzeugquerachse 117 schwenkbaren, kurzen und beispielsweise V-förmigen Schwenklenker 116. An diesem ist der Hydraulikzylinder 10 über das Gelenk 10a beweglich gehalten. Der Schwenklenker 116 umfaßt am Ende seines der Anlenkung 10a abgewandten Schenkels eine Anlenkung 123 für einen Zwischenhebel 124, der seinerseits über das Gelenk 128 beweglich mit einem auch hier gabelförmigen Greifer 118 verbunden ist. Dieser ist prinzipiell wie im ersten Ausführungsbeispiel zur Zusammenwirkung mit einem Gegenstück 119 des Deckelteils 105 vorgesehen. Durch die sehr kurzen Hebel 116, 124 kann der in Fahrzeuglängsrichtung benötigte Bauraum hier sehr klein gehalten werden.

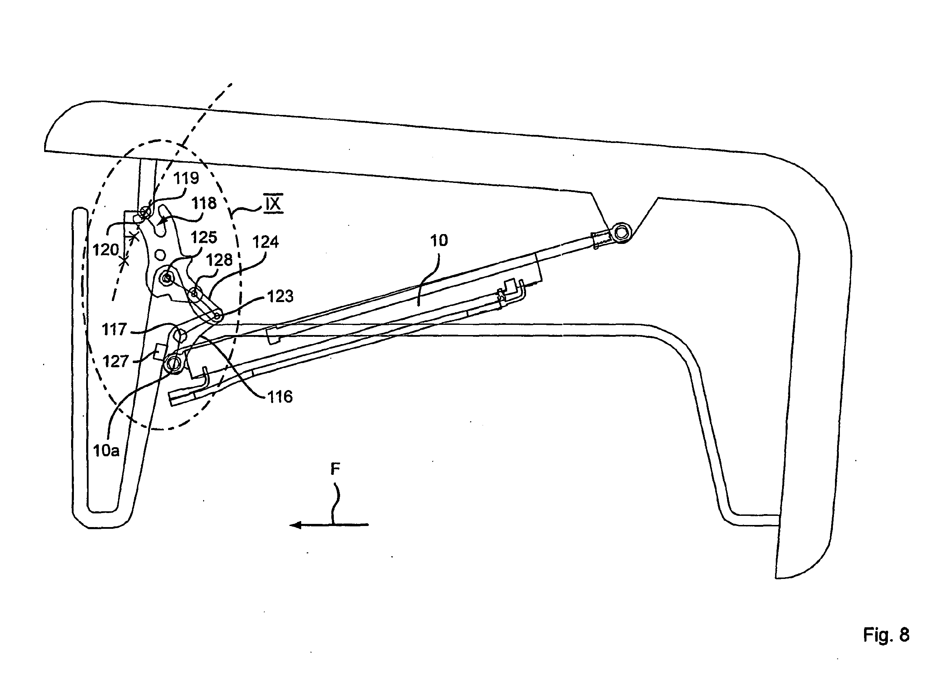

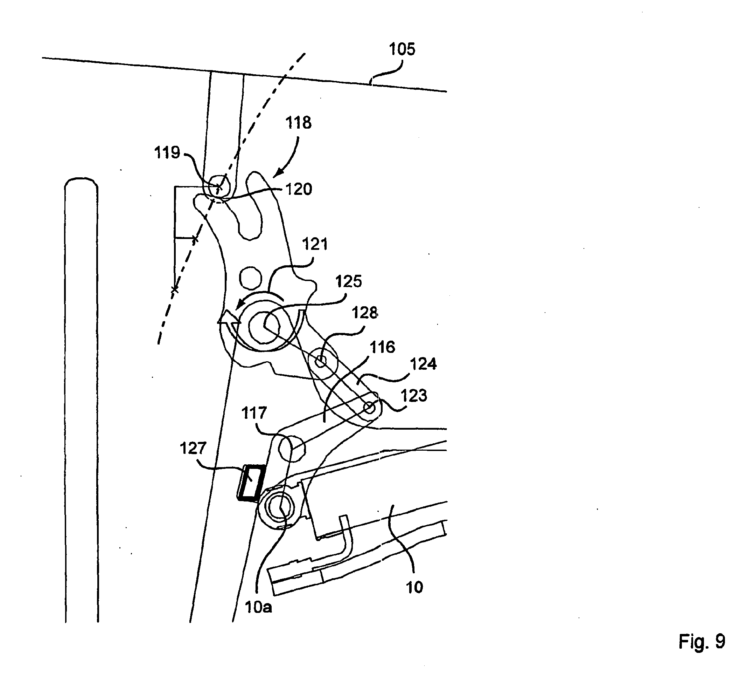

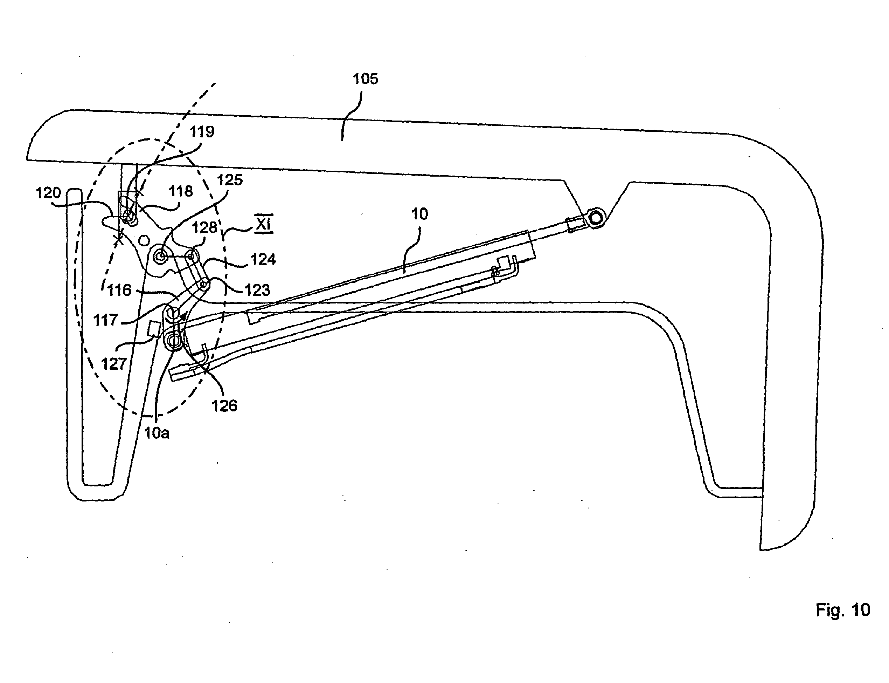

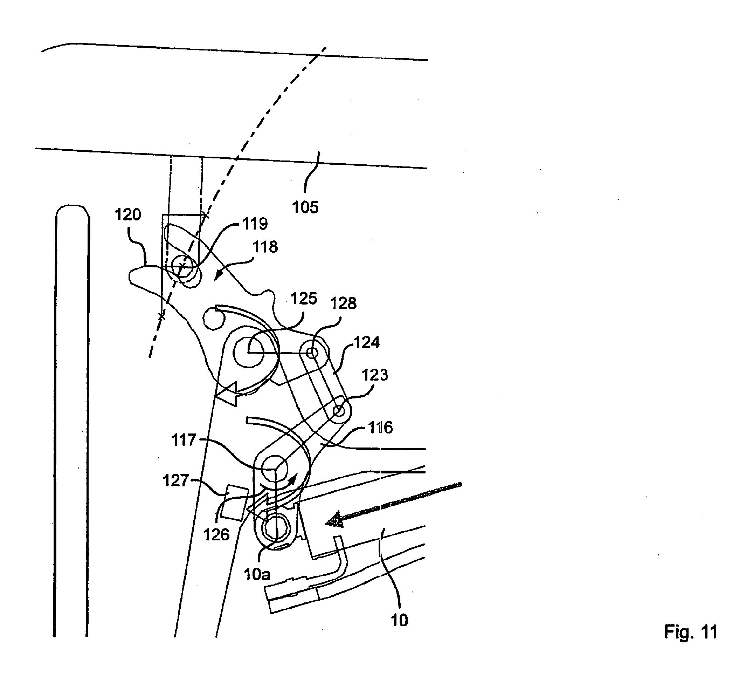

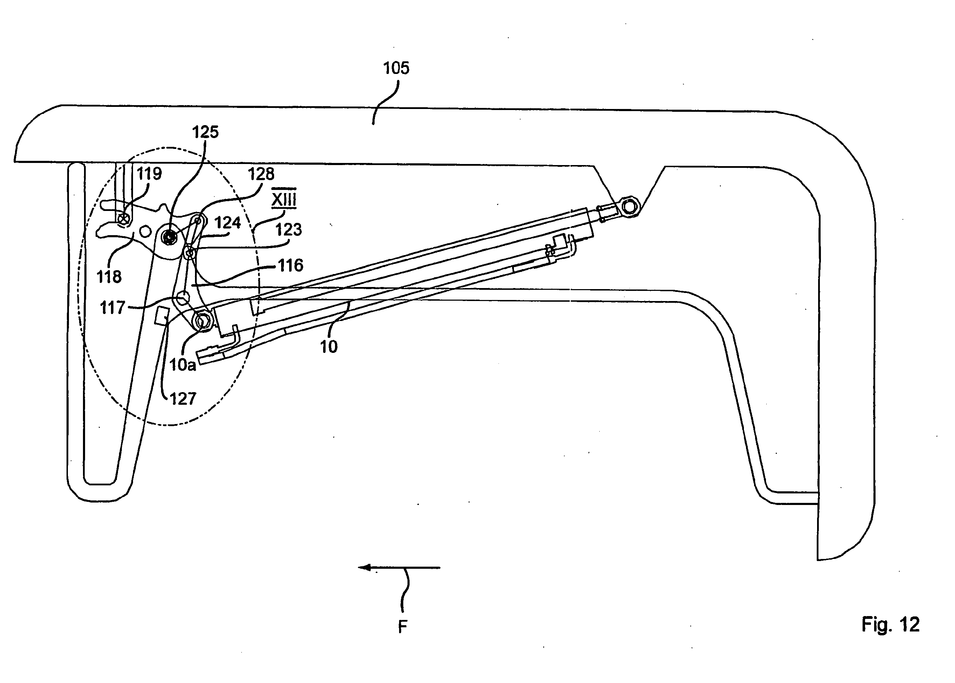

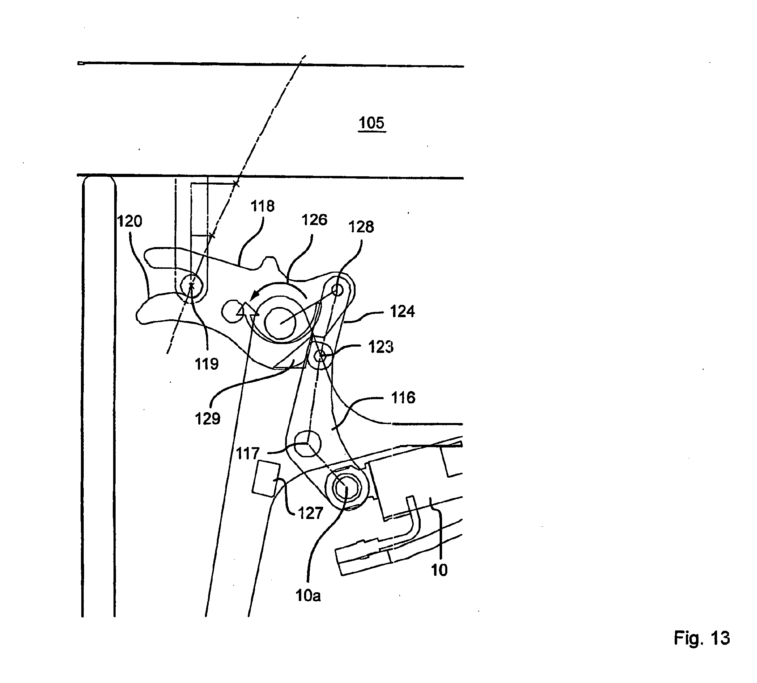

In der Endphase der Schließbewegung des Deckelteils 105 (Fig. 8 ff.) trifft durch dessen Abwärtsbewegung der Bolzen 119 auf die in Fahrtrichtung F vordere Gabelzinke 120 des im wesentlichen hochkant stehenden Greifers 118 auf und verschwenkt diesen gegen die Kraft einer ihn in Öffnungsstellung haltenden Feder in Richtung des Pfeils 121 um die Achse 125. Dabei zieht er den Zwischenhebel 124 mit (Übergang von den Figuren 8 und 9 zu den Figuren 10 und 11). Dessen untere Anlenkung 123 wird gleichzeitig durch das weitere Einziehen des Hydraulikzylinders 10 und das Verschwenken des Lenkers 116 um die Achse 117 in Richtung des Pfeils 126 verschwenkt und aufwärts verlagert. Der Lenker 116 löst sich dabei von seiner Anlage an den Anschlag 127. Dabei gelangt (Fig. 12, Fig. 13) das Verbindungsgelenk 123 hinter die direkte Verbindungslinie zwischen den Gelenken 117 und 128 und wird dort gegen einen zweiten Anschlag 129 gedrückt. Die Zuziehvorrichtung 115 befindet sich dann in einer Über-Totpunkt-Lage, so daß durch Zug auf das vordere Ende des Deckelteils 5 im Öffnungssinn das Gelenk 123 noch stärker gegen den Anschlag gedrückt und der Hydraulikzylinder 10 im Schließsinn beaufschlagt wird, woraus sich eine zusätzliche Dekkelsicherung in der geschlossenen Stellung ergibt. Ein gesondertes Schloß zur Sicherung der geschlossenen Stellung ist dann entbehrlich.

In den ersten beiden Ausführungsbeispielen ist die Zuziehvorrichtung 15, 115 jeweils direkt oder über den Hydraulikzylinder 10 im Nahbereich seiner eingezogenen Stellung beweglich. Allenfalls ein Zwischenhebel 124 kann neben dem Lenker 16, 116, an dem das Antriebsorgan 10 angeordnet ist, in Verbindung zum Greifer 118 vorgesehen sein.

Im dritten Ausführungsbeispiel hingegen ist eine Bowdenzugverbindung 224 dem Hydraulikzylinder 210 und dem Greifer 218 zwischengeschaltet, wobei der Greifer hier auch dem Deckelteil 205 zugeordnet sein kann, jedoch nicht muß. Der Bowdenzug 224 ist an einem Bolzen 230 des Deckelteils 205 gehalten, der in einer Kulisse 231 der Kolbenstange des Hydraulikzylinders 210 gelegen und gegenüber dem die an der Kolbenstange des Hydraulikzylinders 210 gehaltene Bowdenzughülle 232 beweglich ist.

Beim Schließen des Deckelteils 205 bleibt zunächst trotz des Einziehens der Kolbenstange des Hydraulikzylinders 210 die Relativlage zwischen der Kulisse 231 und dem Bolzen 230 unverändert, bewirkt durch die Kraft der Feder 233. Erst kurz vor Erreichen der Schließlage wird durch weiteres Einfahren der Kolbenstange die Feder 233 eingedrückt, wobei die Kulisse 231 gegenüber dem Bolzen 230 im wesentlichen in Fahrtrichtung F nach vorne gezogen wird. Daraus ergibt sich dann eine Relativbewegung zwischen Bowdenzug 224 und Bowdenzughülle 232, die die Verschwenkung der hier dem Deckelteil 205 zugeordneten Schließfalle 218 bewirkt.

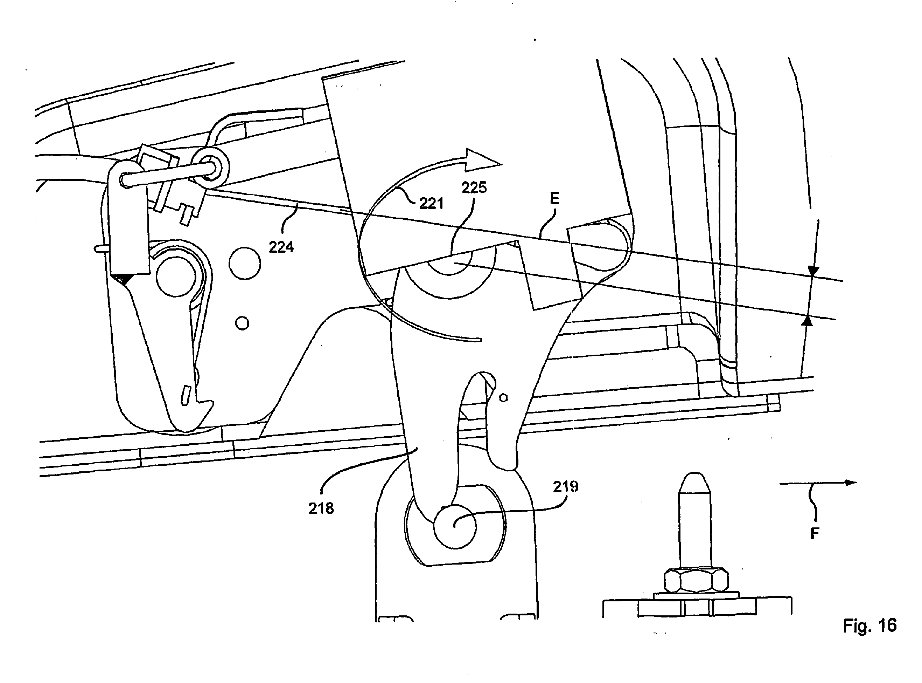

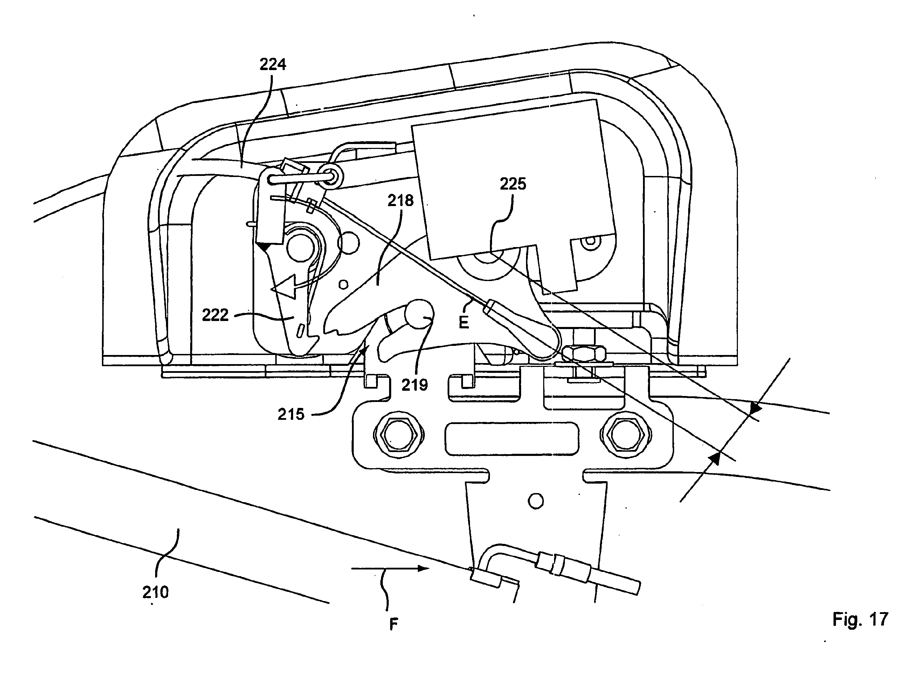

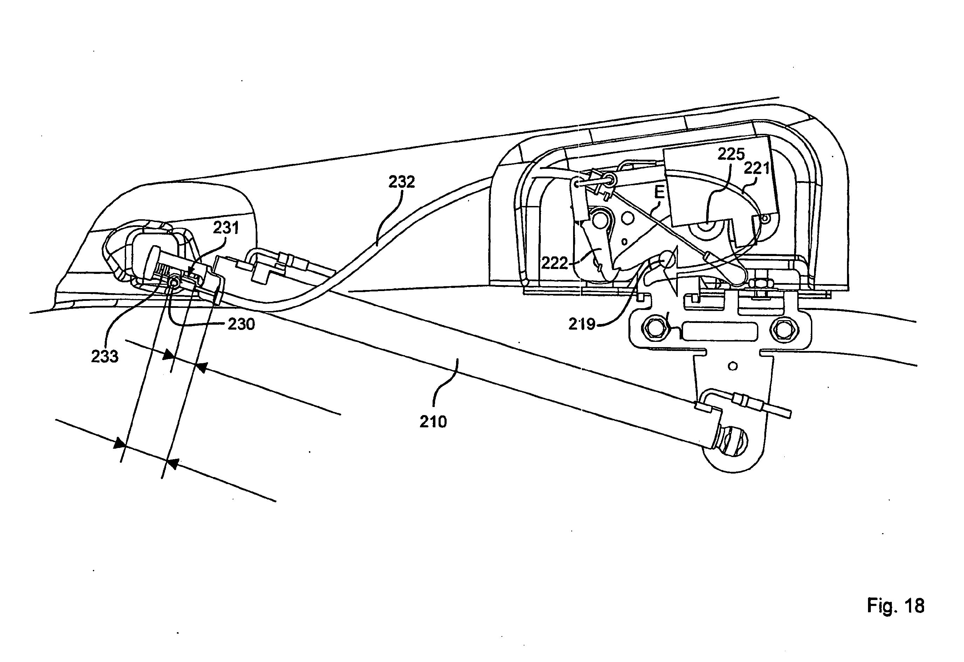

Dabei trifft der Greifer 218 durch die Abwärtsbewegung des Deckelteils 105 auf den hier der Karosserie zugeordneten Bolzen 219. Durch die eben beschriebene Bowdenzugbewegung wird der Greifer 218 um die Achse des Gelenks 225 in Richtung des Pfeils 221 verschwenkt. Dabei gelangt (Übergang von Fig. 16 zu Fig. 18) dieses Gelenk 225 jenseits der Erstreckungslinie E des Bowdenzugs 224 (Übergang von Figur 16 zu Figur 17). Die Zuziehvorrichtung 215 befindet sich dann auch hier in einer Über-Totpunkt-Lage und kann in geschlossener Stellung zusätzlich durch ein Schloß 222 in Gestalt einer Sperrklinke gesichert sein (Fig. 18).

## Patentansprüche

1. Kraftfahrzeug (1) mit einem zumindest teilweise bewegli chen und in der Karosserie (4) unterhalb eines Deckelteils (5;105) ablegbaren Dach (2), wobei das Deckelteil (5;105.) zur Freigabe einer Durchtrittsöffnung (3) der Dachteile oder des vollständigen Daches (2) in einem nach hinten öffnenden Schwenksinn aufbeweglich ist,
**dadurch gekennzeichnet,**
**daß** für die Öffnungs- und Schließbewegung seitlich zumindest ein im wesentlichen in einer vertikalen Fahrzeuglängsebene und bei geschlossenem Deckelteil (5;105) flach liegendes Antriebsorgan (10) vorgesehen ist, das im Nahbereich seiner eingezogenen Stellung eine zumindest einen karosserieseitig gelagerten Schwenklenker (16;116) umfassende bewegliche zuziehhilfe (15;115) für den Deckel (5;105) durch Einwirkung auf den Schwenklenker (16;116) betätigt, wobei die Einwirkung **dadurch** erfolgt, daß das Antriebsorgan (10) beweglich an dem Schwenklenker (16:116) gehalten ist.

2. Kraftfahrzeug (1) nach Aspruch 1,
**dadurch gekennzeichnet,**
**daß** für die Öffnungs- und Schließbewegung seitlich zumindest ein im wesentlichen in einer vertikalen Fahrzeuglängsebene und bei geschlossenem Deckelteil (5;105;205) flach liegendes Antriebsorgan (10;210) vorgesehen ist, das im Nahbereich seiner eingezogenen Stellung eine bewegliche Zuziehhilfe (15;115:215) für den Deckel (5;105;205) betätigt, die bei voll eingezogenen Antriebsorgan (10;210) in einer Über-Totpunkt-Stellung gehalten ist.

3. Kraftfahrzeug (1) nach Anspruch 2,
**dadurch gekennzeichnet,**
**daß** eine äußere Krafteinleitung auf das geschlossene Deckelteil (105;205) im Öffnungssinn das Antriebsorgan (10;210) im Einziehsinn beaufschlagt.

4. Kraftfahrzeug (1) nach einem der Ansprüche 1 bis 3,
**dadurch gekennzeichnet,**
**daß** die Zuziehhilfe (15;115) einen Greifer (18;118) umfaßt, der in der Endphase des Schließens des Deckelteils (5;105) durch Einfahren des Antriebsorgans (10) verschwenkbar ist und **dadurch** ein aufgenommenes Gegenstück (19;119) des Deckelteils (5;105) abwärts zieht.

5. Kraftfahrzeug (1) nach einem der Ansprüche 1 bis 4;
**dadurch gekennzeichnet,**
**daß** das Antriebsorgan als Hydraulikzylinder (10) ausgebildet ist, der an einem um eine karosseriefeste Achse (17;117) schwenkbaren Lenker (16;116) gehalten ist

6. Kraftfahrzeug (1) nach einem der Ansprüche 1 bis 5,
**dadurch gekennzeichnet,**
**daß** das Antriebsorgan (10;210) bei einem Öffnungswinkel des Deckelteils (5;105;205) von weniger als 10° gegen die Horizontale selbst weniger als 30° gegen die Horizontale geneigt ist.

7. Kraftfahrzeug (1) nach einem der Ansprüche 1 bis 6,
**dadurch gekennzeichnet,**
**daß** ein fernbetätigbares Schloß (22;222) zur Sicherung der geschlossenen Stellung des Deckelteils durch Blockierung der Bewegung der Zuziehhilfe (15) vorgesehen ist.

8. Kraftfahrzeug (1) nach einem der Ansprüche 1 bis 7,
**dadurch gekennzeichnet,**
**daß** zwischen dem Schwenklenker (116), an dem der Hydraulikzylinder (10) gelagert ist, und der Zuziehhilfe (115) zumindest ein kraftumlenkender Zwischenhebel (124) vorgesehen ist.

9. Kraftfahrzeug (1) nach einem der Ansprüche 1 bis 8,
**dadurch gekennzeichnet,**
**daß** der Bewegungsraum des Schwenklenkers (16;116)
und ggf. des oder der Zwischenhebel(s) (124) durch zumindest einen karosseriefesten Anschlag (127;129) begrenzt ist.

10. Kraftfahrzeug (1) nach einem der Ansprüche 1 bis 9,
**dadurch gekennzeichnet**e
daß das Deckelteil (5;105;205) in einem zweiten, gegensinnigen Schwenksinn zur Freigabe einer Beladeöffnung für Gepäck aufbeweglich ist.

11. Kraftfahrzeug (1) nach einem der Ansprüche 1 bis 10,
**dadurch gekennzeichnet,**
**daß** dieses ein Cabriolet-Fahrzeug mit einem voll versenkbaren Dach (2) ist.

## Claims

1. Vehicle (1) with an at least partly movable roof (2) that can be disposed in the vehicle body (4) beneath a cover part (5; 105), the cover part (5; 105) being rearwardly pivotable such that the roof parts or the complete roof pass through the opening (3) created by an opening movement of the cover part (5; 105)
**characterized in that**
at least one driving element (10) for the opening and closing movement is provided laterally, substantially in a vertical longitudinal plane of the vehicle, which driving element is horizontal when the cover part (5; 105) is closed, and which driving element, in proximity to its retracted position, operates a movable closing aid (15; 115) for the cover (5; 105), which comprises at least one pivotable guide member (16; 116) supported on a side of the vehicle, wherein the moving action is effected by the driving element being movably held on the pivotable guide member (16; 116).

2. Vehicle (1) according to claim 1,
**characterized in that**
at least one driving element (10; 210) for the opening and closing movement is provided laterally, substantially in a vertical longitudinal plane of the vehicle, which driving element is horizontal when the cover part (5; 105) is closed, and which driving element in proximity to the retracted position, operates a moveable closing aid (15; 115; 215) for the cover (5; 105, 205), said closing aid being held in an over dead centre position when the driving element is completely retracted.

3. Vehicle (1) according to claim 2,
**characterized in that**
an external application of force on the closed cover part (105; 205) in the opening direction acts upon the driving element (10; 210) in the retracting direction.

4. Vehicle (1) according to one of the claims 1 to 3,
**characterized in that**
the closing aid (15; 115) comprises a claw (18; 118), which is pivotable in the final stage of closing the cover part (5; 105) by retraction of the driving member, and thereby pulls down an accommodated counter member (19; 119) of the cover part.

5. Vehicle (1) according to one of the claims 1 to 4,
**characterized in that**
the driving element is formed as a hydraulic cylinder (10) coupled to a bar (16; 116) that is held pivotably around an axis (17; 117) fixed to the vehicle.

6. Vehicle (1) according to one of the claims 1 to 5,
**characterized in that**
with an opening angle of the cover part (5; 105; 205) of less than 10° to the horizontal, the driving element (10; 210) is inclined less than 30° to the horizontal.

7. Vehicle (1) according to one of the claims 1 to 6,
**characterized in that**
a remotely controllable lock (22; 222) is provided for securing the locked position of the cover part by blocking the movement of the closing aid (15).

8. Vehicle (1) according to one of the claims 1 to 7,
**characterized in that**
at least one force deflecting intermediate lever (124) is provided between the pivotable guide member (116) that supports the hydraulic cylinder (10), and the closing aid (115).

9. Vehicle (1) according to one of the claims 1 to 8,
**characterized in that**
the operating space of the pivotable guide member (16; 116) and, if necessary, the operating space of the at least one intermediate lever (124) is restricted by at least one body-fixed stopper.

10. Vehicle (1) according to one of the claims 1 to 9,
**characterized in that**
the cover part (5; 105; 205) is openable in a second, opposite, pivoting direction to create an opening for loading luggage.

11. Vehicle (1) according to one of the claims 1 to 10,
**characterized in that**
said vehicle is a convertible with a completely retractable roof (2).

## Revendications

1. Véhicule automobile (1) comprenant un toit (2) au moins en partie mobile et rabattable dans la carrosserie (4) en dessous d'une partie de recouvrement (5 ; 105), la partie de recouvrement (5 ; 105) pouvant être soulevée pour dégager une ouverture de passage (3) de parties du toit ou de l'ensemble du toit (2) dans un sens de pivotement s'ouvrant vers l'arrière, **caractérisé en ce que**,
pour le mouvement d'ouverture et de fermeture, il est prévu latéralement au moins un organe d'entraînement (10) posé à plat dans un plan longitudinal vertical du véhicule et lorsque la partie de recouvrement (5 ; 105) est fermée, lequel organe d'entraînement actionne, à proximité de sa position rentrée, un dispositif auxiliaire de fermeture mobile (15 ; 115) comprenant au moins une bielle pivotante (16 ; 116) montée du côté carrosserie pour la partie de recouvrement (5 ; 105) en agissant sur la bielle pivotante (16 ; 116) de sorte que l'organe d'entraînement (10) soit maintenu de manière mobile sur la bielle pivotante (16 ; 116).

2. Véhicule automobile (1) selon la revendication 1, **caractérisé en ce que**, pour le mouvement d'ouverture et de fermeture, il est prévu latéralement au moins un organe d'entraînement (10 ; 210) posé sensiblement à plat dans un plan longitudinal vertical du véhicule et lorsque la partie de recouvrement (5 ; 105 ; 205) est fermée, lequel organe d'entraînement actionne, à proximité de sa position rentrée, un dispositif auxiliaire de fermeture mobile (15 ; 115 ; 215) pour la partie de recouvrement (5 ; 105 ; 205), qui est maintenu en position de point mort supérieur lorsque l'organe d'entraînement (10 ; 210) est complètement rentré.

3. Véhicule automobile (1) selon la revendication 2, **caractérisé en ce qu'**une application de force extérieure sur la partie de recouvrement fermée (105 ; 205) dans le sens d'ouverture sollicite l'organe d'entraînement (10, 210) dans le sens d'une rentrée.

4. Véhicule automobile (1) selon l'une quelconque des revendications 1 à 3, **caractérisé en ce que** le dispositif auxiliaire de fermeture (15, 115) comprend une griffe (18, 118), qui peut pivoter en phase finale de la fermeture de la partie de recouvrement (5, 105) en rentrant l'organe d'entraînement (10) et tire de la sorte vers le bas un pendant reçu (19, 119) de la partie de recouvrement (5, 105).

5. Véhicule automobile (1) selon l'une quelconque des revendications 1 à 4, **caractérisé en ce que** l'organe d'entraînement se présente sous la forme d'un cylindre hydraulique (10) qui est maintenu sur une bielle (16, 116) pivotant autour d'un axe (17 ; 117) fixé sur la carrosserie.

6. Véhicule automobile (1) selon l'une quelconque des revendications 1 à 5, **caractérisé en ce que** l'organe d'entraînement (10 ; 210) est incliné lui-même de moins de 30° par rapport à l'horizontale lorsque l'angle d'ouverture de la partie de recouvrement (5 ; 105 ; 205) est inférieur à 10° par rapport à l'horizontale.

7. Véhicule automobile (1) selon l'une quelconque des revendications 1 à 6, **caractérisé en ce qu'**il est prévu un verrou actionnable à distance (22 ; 222) pour assurer la position fermée de la partie de recouvrement en bloquant le mouvement du dispositif auxiliaire de fermeture (15).

8. Véhicule automobile (1) selon l'une quelconque des revendications 1 à 7, **caractérisé en ce qu'**au moins un levier intermédiaire déviateur de forces (124) est prévu entre le bielle pivotant (116), sur lequel est monté le cylindre hydraulique (10), et le dispositif auxiliaire de fermeture (115).

9. Véhicule automobile (1) selon l'une quelconque des revendications 1 à 8, **caractérisé en ce que** le jeu de déplacement du bielle pivotant (16, 116) et éventuellement du ou des leviers intermédiaires (124) est limité par au moins une butée (127, 129) fixée sur la carrosserie.

10. Véhicule automobile (1) selon l'une quelconque des revendications 1 à 9, **caractérisé en ce que** la partie de recouvrement (5, 105, 205) peut être relevée dans un second sens inverse de pivotement pour dégager une ouverture de chargement pour bagages.

11. Véhicule automobile (1) selon l'une quelconque des revendications 1 à 10, **caractérisé en ce que** celui-ci est un véhicule de type cabriolet avec un toit complètement escamotable (2).
